# EUROPEAN PATENT APPLICATION

(11) **EP 4 793 103 A1**
(43) Date of publication of application: **19.08.2026**
(21) Application number: 25226237.3
(22) Date of filing: 22.12.2025
(51) Int. Cl.: B60R 16/023, H01R 13/52

(54) **JUNCTION BOX**

(30) Priority: 13.02.2025 JP 2025021434
(71) Applicant: Toyota Jidosha Kabushiki Kaisha, Toyota-shi, Aichi-ken 471-8571 (JP)
(72) Inventor: KAWAMURA, Shuji, Toyota-shi, 471-8571 (JP)
(74) Representative: TBK

(57) **Abstract**

A junction box used in connection with a fuel cell includes a housing, a connector protruding from a side wall of the housing, and a protective part configured to cover at least a region of the connector to protect the connector. The protective part has a first protective part facing at least a region of an upper part of the connector, and a second protective part facing at least a region of a side part of the connector.

## Description

### CROSS REFERENCE TO RELATED APPLICATIONS

The present application claims the priority benefit of Japanese patent application No. 2025-21434 filed on February 13, 2025, and the entire disclosure thereof is incorporated herein by reference.

### BACKGROUND

### FIELD

The present disclosure relates to a junction box used in a state of being connected to a fuel cell.

### RELATED ART

A high-voltage cable connected to a fuel cell stack for automotive use has been disclosed in the Japanese patent application laid-open publication No. 2007-141636. The high-voltage cable may be connected to a junction box which distributes electrical power to electrical devices mounted in a vehicle.

The junction box is equipped with connectors which are electrically connected to electrical devices. In many cases, high voltage is applied to the connectors, and thus it is desirable to provide a technique which suppresses the occurrence of damage to the connectors due to an unexpected external force.

### SUMMARY

In one aspect of the present disclosure, a junction box used in a state of being connected to a fuel cell is provided. The junction box includes a housing, a connector protruding from a side wall of the housing, and a protective part configured to cover at least a region of the connector to protect the connector. The protective part has a first protective part facing at least a region of an upper part of the connector, and a second protective part facing at least a region of a side part of the connector.

### BRIEF DESCRIPTION OF THE DRAWINGS

Fig. 1 is a top view of a junction box mounted in a vehicle in the present embodiment;
Fig. 2 is a perspective view of a connector attached to a housing in the present embodiment;
Fig. 3 is a perspective view of a protective part in the present embodiment;
Fig. 4 is a cross-sectional view of the protective part cut along a line A-A in Fig. 3;
Fig. 5 is a side view of the protective part in the present embodiment; and
Fig. 6 is a cross-sectional view of the protective part cut along a line B-B in Fig. 3.

### DETAILED DESCRIPTION

### A. First embodiment:

### A1. Overall configuration of junction box 100:

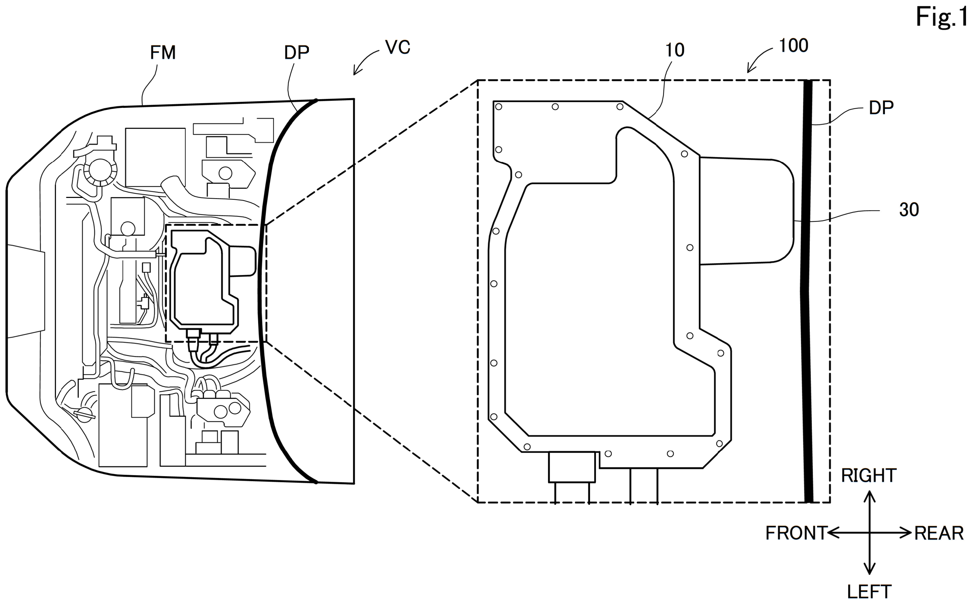

Fig. 1 is a top view of a junction box 100 mounted in a vehicle VC in the present embodiment. For convenience in explaining the present embodiment, the direction along the traveling direction of the vehicle VC is referred to as a "front-rear direction", the vertical direction viewed from a driver seated in the vehicle VC is referred to as an "up-down direction", and the left-right direction viewed from the driver seated in the vehicle VC is referred to as a "left-right direction". The "front-rear direction", the "up-down direction", and the "left-right direction" are mutually orthogonal.

The junction box 100 is used in a state of being connected to a fuel cell not shown in the drawings. The junction box 100 distributes the electrical power supplied from the fuel cell to electrical devices mounted in the vehicle VC, such as an air compressor, a motor, and a battery, not shown in the drawings. The vehicle VC runs on the electrical power supplied from the fuel cell.

As shown in Fig. 1, the junction box 100 is mounted inside a front section FM at the front portion in the vehicle VC. The front section FM contains numerous components arranged in layers in the up-down direction. The junction box 100 is arranged at the center in the left-right direction in the front section FM, on the uppermost layer in the front section FM. The fuel cell is mounted on a layer below the junction box 100. A dash panel DP is disposed behind the junction box 100.

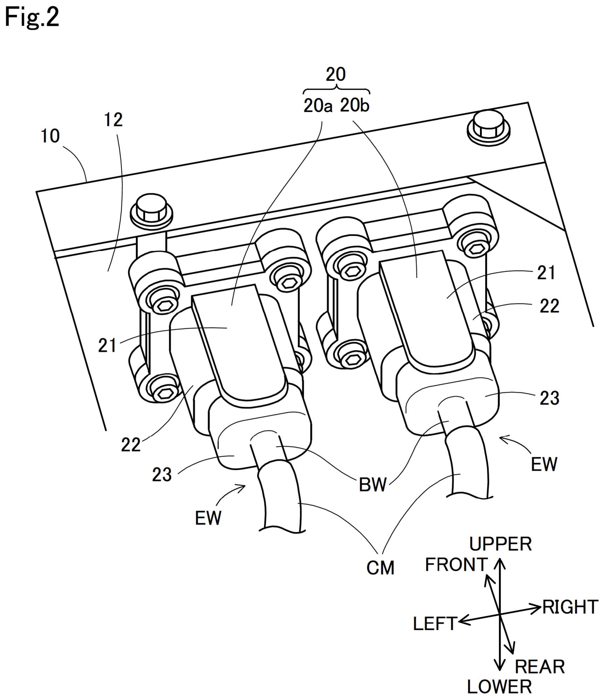

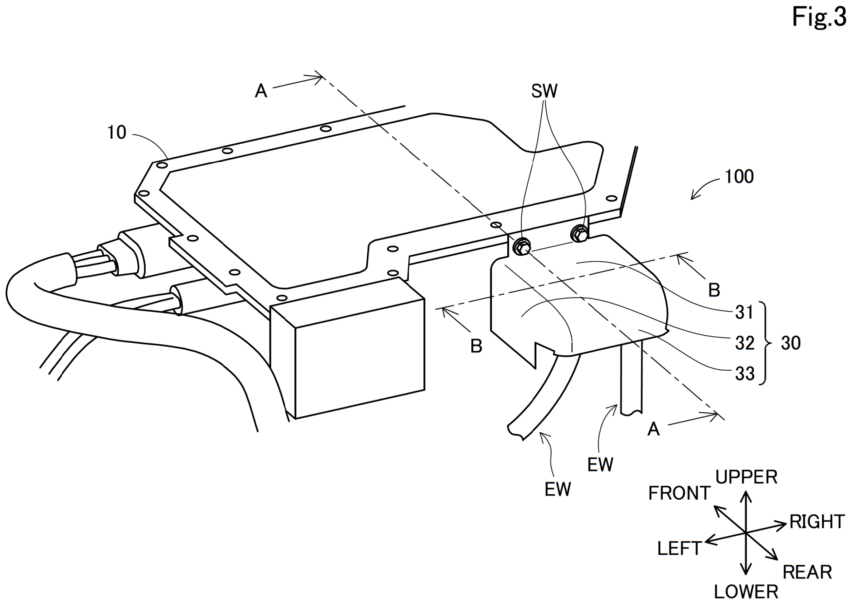

Fig. 2 is a perspective view of a connector 20 attached to a housing 10 in the present embodiment. Fig. 3 is a perspective view of a protective part 30 in the present embodiment. As shown in Fig. 2 and Fig. 3, the junction box 100 includes the housing 10, the connector 20, and the protective part 30. The protective part 30 is not shown in Fig. 2.

### <Housing 10>

The housing 10 is made of a material whose main component is aluminum. The housing 10 includes a fuse, busbar wiring, and the like for distributing the electrical power supplied from the fuel cell, which are not shown in the drawings. The electrical power supplied from the fuel cell is supplied to the electrical devices mounted in the vehicle VC via the busbar wiring.

### <Connector 20>

High voltage is applied to the connector 20 in order to supply the electrical power to the electrical devices mounted in the vehicle VC. As shown in Fig. 2, the connector 20 protrudes rearward from a rear side wall 12 of the housing 10. In the present embodiment, two connectors 20 are arranged in parallel in the left-right direction, and the connectors 20 protrude rearward from the side wall 12. In the connectors 20, the connector 20 positioned on the left is referred to as a "first connector 20a", and the connector 20 positioned on the right is referred to as a "second connector 20b".

The connector 20 has an upper part 21 facing upward, a pair of side parts 22 including the side part 22 facing leftward and the side part 22 facing rightward, and a rear part 23 facing rearward. In the present embodiment, the "rear part 23" corresponds to the connector end 23 in the protruding direction of the connector 20. As shown in Fig. 2, the rear parts 23 of the connectors 20 are connected to electrical wirings EW, respectively. The electrical wirings EW connected to the connectors 20 will be detailed later.

In the present embodiment, the upper part 21 is visible part when the connector 20 is viewed from above. Similarly, the side part 22 is visible part when the connector 20 is viewed from the left or right, and the rear part 23 is visible part when the connector 20 is viewed from the rear. Therefore, in the case of the connector 20 having a partially rounded shape as in the present embodiment, the area of the upper part 21 partially overlaps with the area of the side part 22.

### <Protective part 30>

The protective part 30 covers at least a region of the connector 20 to protect the connector 20. The protective part 30 is provided as a separate member from the housing 10. In one example, the protective part 30 is formed by shaping a metal material with excellent toughness and ductility, such as steel, into a plate. The ductility and toughness of the material for the protective part 30 are superior to those of the material for the housing 10.

As shown in Fig. 3, the protective part 30 has a first protective part 31, a second protective part 32, and a third protective part 33. The first protective part 31, the second protective part 32, and the third protective part 33 together form a smooth shape which is continuous with each other. The first protective part 31 is positioned above the upper parts 21 of the connectors 20, and faces the upper parts 21. The second protective part 32 is positioned to the left of the left side part 22 of the first connector 20a, and faces the left side part 22. The second protective part 32 is positioned to the right of the right side part 22 of the second connector 20b, and faces the right side part 22. The third protective part 33 is positioned behind the rear parts 23 of the connectors 20, and faces the rear parts 23.

As shown in Fig. 3, the upper part 21 of the connector 20 is configured so as to be invisible from above due to the first protective part 31. Similarly, the left side part 22 of the first connector 20a is configured so as to be invisible from the left, and the right side part 22 of the second connector 20b is configured so as to be invisible from the right. The rear part 23 of the connector 20 is configured so as to be invisible from the rear due to the third protective part 33.

The first protective part 31 is not required to face the entirety of the upper part 21, but only needs to face at least a region of the upper part 21. Similarly, the second protective part 32 only needs to face at least a region of the left side part 22 of the first connector 20a or the right side part 22 of the second connector 20b, and the third protective part 33 only needs to face at least a region of the rear part 23.

For example, in the event that the moving vehicle VC without the protective part 30 collides with an obstacle in front, the connector 20 is expected to be subjected to a force from the dash panel DP. This happens because the dash panel DP has a portion which overlaps with the connector 20 when viewed from above or behind. In contrast, in the present embodiment, the protective part 30 covers the connector 20 to protect the connector 20, thereby suppressing the occurrence of damage to the connector 20 due to a force from the dash panel DP. The following describes in detail the protective part 30 for appropriately protecting the connector 20, and the surrounding structure of the protective part 30.

### A2. Detailed structure of protective part 30 and surrounding structure thereof:

### <Protective structure for electrical wiring EW>

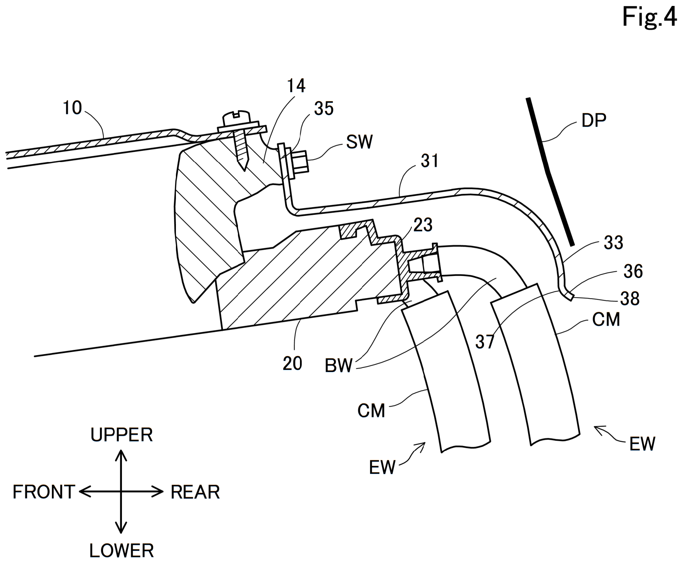

Fig. 4 is a cross-sectional view of the protective part 30 cut along the line A-A in Fig. 3. As shown in Fig. 4, the electrical wirings EW respectively connected to the rear parts 23 of each connector 20 extend downward from the rear parts 23 of the connectors 20. High voltage is applied to each electrical wiring EW, as with the connectors 20. Therefore, it is preferable that each electrical wiring EW is also protected together with each connector 20. In this regard, as shown in Fig. 2 and Fig. 4, the outer periphery of each electrical wiring EW is covered with a covering material CM made of an insulating material. The covering material CM is fixed to the electrical wiring EW with an insulating tape, thereby protecting the outer periphery of the electrical wiring EW. In some cases, it may be difficult to cover the entirety of the electrical wiring EW including the connection portion to the connector 20, with the covering material CM. In such cases, as in the present embodiment, a region of the electrical wiring EW, including the connection portion to the connector 20, is exposed as a bare wiring BW which is not covered with the covering material CM.

The first protective part 31, the second protective part 32, and the third protective part 33 are configured to cover not only the connector 20 but also a region of the electrical wiring EW including the connection portion to the connector 20, i.e., the bare wiring BW which is not covered with the covering material CM. More specifically, the bare wirings BW of the electrical wirings EW respectively connected to the connectors 20 are covered by the first protective part 31, so that they are invisible from above, and are covered by the third protective part 33, so that they are invisible from the rear. Similarly, the bare wiring BW of the electrical wiring EW connected to the first connector 20a is covered by the second protective part 32, so that it is invisible from the left. The bare wiring BW of the electrical wiring EW connected to the second connector 20b is covered by the second protective part 32, so that it is invisible from the right.

As shown in Fig. 4, the third protective part 33 includes an end part 36 positioned opposite to the connection between the first protective part 31 and the third protective part 33, and the end part 36 includes a bending part 37 which is bent in a direction away from the electrical wiring EW. In the event of a collision involving the vehicle VC, when the protective part 30 provided without the bending part 37 deforms downward, there is a risk of contact of a terminal end 38 of the end part 36 of the third protective part 33 with the electrical wiring EW. In contrast, in the present embodiment, the arrangement of the bending part 37 suppresses the contact of the terminal end 38 of the end part 36 of the third protective part 33 with the electrical wiring EW. Accordingly, the occurrence of damage to the electrical wiring EW is suppressed, and the electrical wiring EW connected to the connector 20 is appropriately protected.

### <Structure of fastening part 35>

As shown in Fig. 4, the housing 10 has a protruding part 14 which protrudes rearward from the rear side wall 12 of the housing 10. More specifically, the protruding part 14 protrudes rearward at a position on the side wall 12, above the protruding position of the connector 20.

The protective part 30 has a fastening part 35 which is fastened to the protruding part 14. As shown in Fig. 3 and Fig. 4, the protective part 30 is fastened to the housing 10 by insertion of two screws SW from the rear of the protruding part 14. The protective part 30 and the housing 10 are electrically connected via the fastening part 35. When the surface of the protective part 30 or the housing 10 is coated with an insulating material, the removal of the coating in the area that comes into contact with the fastening part 35 enables electrical connection between the protective part 30 and the housing 10.

### <Structure below protective part 30>

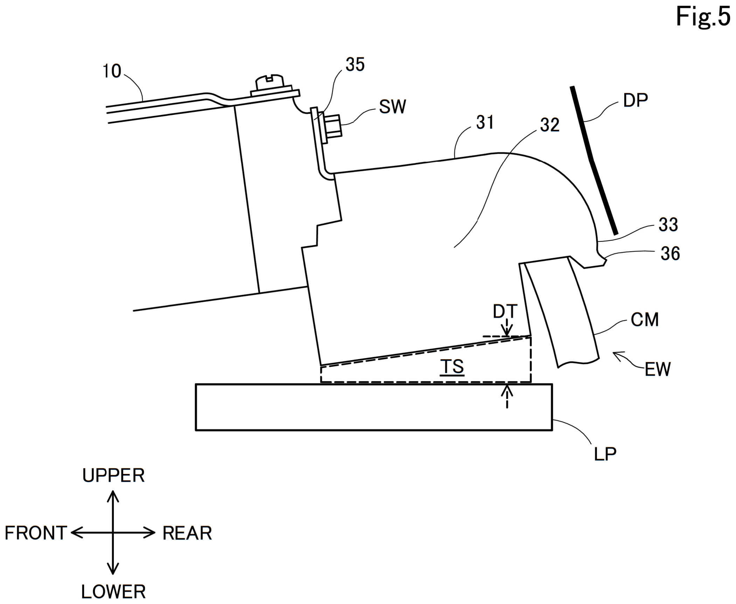

Fig. 5 is a side view of the protective part 30 in the present embodiment. As shown in Fig. 5, a space TS is provided between the protective part 30 and an arbitrary lower-layer component LP mounted below the protective part 30. This suppresses the occurrence of damage to the protective part 30 or damage to the lower-layer component LP due to the contact of the protective part 30 with the lower-layer component LP even if the protective part 30 deforms downward in the event of a collision involving the vehicle VC. Accordingly, the protective part 30 is capable of appropriately protecting the connector 20. The space TS has a length which is a distance DT between the protective part 30 and the lower-layer component LP, and the distance DT is preferably limited by a lower limit and an upper limit. The lower limit may be set based on, for example, an estimated amount of downward change of the protective part 30 in the event of a collision involving the vehicle VC.

The upper limit may be set based on, for example, the value of an estimated amount of downward change of the protective part 30 in the event of a collision involving the vehicle VC, plus an average diameter of a human finger. This suppresses insertion of the finger of a worker who repairs the vehicle VC between the protective part 30 and the lower-layer component LP when the protective part 30 deforms downward in the event of a collision involving the vehicle VC.

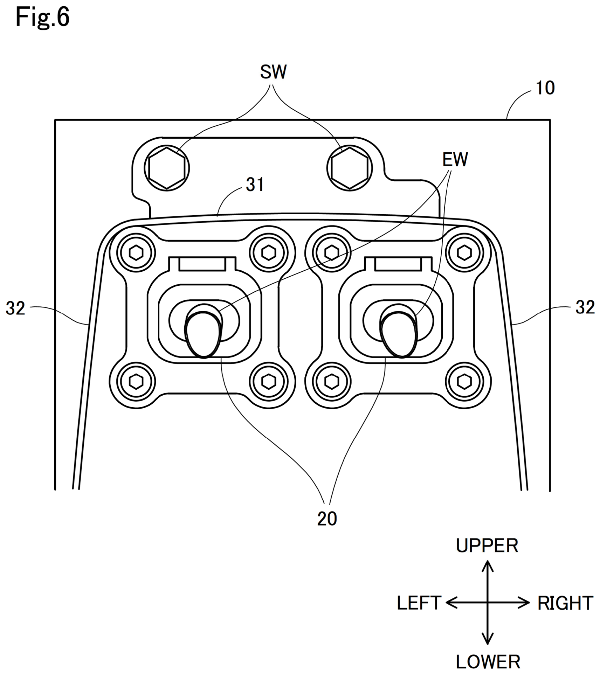

Fig. 6 is a cross-sectional view of the protective part 30 cut along the line B-B in Fig. 3. As shown in Fig. 6, the second protective part 32 extends progressively away from the connector 20 as its position is further apart from the connection between the second protective part 32 and the first protective part 31. That is, the left second protective part 32 extends progressively leftward away from the connector 20 as its position is further downward. Similarly, the right second protective part 32 extends progressively rightward away from the connector 20 as its position is further downward. Therefore, even if the protective part 30 comes into contact with the lower-layer component LP in the event of a collision involving the vehicle VC, the second protective part 32 deforms to spread away from the connectors 20. This more effectively suppresses the occurrence of damage to the protective part 30 or damage to the lower-layer component LP due to the contact between the protective part 30 and the lower-layer component LP.

In the junction box 100 described above, the first protective part 31 faces at least a region of the upper part 21 of the connector 20, thereby suppressing an external force acting on the connector 20 from the side facing to the upper part 21 of the connector 20. Furthermore, the second protective part 32 faces at least a region of the side part 22 of the connector 20, thereby suppressing an external force acting on the connector 20 from the side facing to the side part 22 of the connector 20. This suppresses the occurrence of damage to the connector 20 due to the external force. Furthermore, the protective part 30 enhances its rigidity by having the second protective part 32. Accordingly, when the protective part 30 is subjected to an impact, the structure suppresses significant deformation of the protective part 30, and hence contact with the connector 20.

In order to suppress the occurrence of an impact on the connector 20, the housing 10 may have a rib formed as a part of the housing 10 in the vicinity of the connector 20, instead of the protective part 30. However, in such a configuration, there is a risk that an external force subjected to the rib is directly transmitted to the housing 10, causing the housing 10 and the like to deform. On the other hand, in the present embodiment, the protective part 30 is provided as a separate member from the housing 10, and accordingly even when an external force is subjected to the protective part 30, the occurrence of deformation of the housing 10 is suppressed.

The third protective part 33 faces at least a region of the connector end 23 in the protruding direction of the connector 20, thereby suppressing an external force acting on the connector 20 from the side facing to the connector end 23.

Since the first protective part 31, the second protective part 32, and the third protective part 33 are configured to cover a region of the electrical wiring EW connected to the connector 20 and the region electrical wiring EW includes the connection portion to the connector 20, the region of the electrical wiring EW including the connection portion to the connector 20 is protected by the first protective part 31, the second protective part 32, and the third protective part 33. This suppresses the occurrence of damage to the region of the electrical wiring EW connected to the connector 20 due to an external force. Furthermore, in the configuration as in the present embodiment where the region of the electrical wiring EW including the connection portion to the connector 20 is not covered with the covering material CM made of an insulating material, while exposed as the bare wiring BW of the electrical wiring EW, the contact of another component with the exposed bare wiring BW is suppressed as well.

Since the protective part 30 has the fastening part 35 which is fastened to the protruding part 14, when the protective part 30 is subjected to an external force, the protective part 30 flexibly deforms with the protruding part 14 as a starting point, thereby effectively absorbing the external force. Accordingly, the protective part 30 is capable of appropriately protecting the connector 20.

In the event of a collision involving the vehicle VC, there is a risk that the connector 20 is damaged, and the damaged connector 20 comes into contact with the protective part 30. Even in such a case, since the protective part 30 and the housing 10 are electrically connected via the fastening part 35, and the housing 10 is made of a metal material such as aluminum with low electrical resistance, the current flowing from the connector 20 to the protective part 30 is conducted to the housing 10 via the fastening part 35.

### B. Other Embodiments:

(B1) In the present embodiment, the junction box 100 is arranged at the center in the left-right direction in the front section FM, on the uppermost layer of the front section FM. However, the present disclosure is not limited thereto. The junction box 100 may be mounted on a lower layer of the front section FM, or may be mounted below the vehicle body, rather than in the front section FM. The junction box 100 is not limited to being mounted in the vehicle VC, and may be used for various purposes such as branching the electrical wiring EW.

(B2) In the present embodiment, the connector 20 is configured to protrude rearward from the rear side wall12 of the housing 10. However, the present disclosure is not limited thereto. The connector 20 may be configured to protrude from the right side, left side, front side, upper side, or lower side of the housing 10.

(B3) In the present embodiment, two connectors 20 are arranged in parallel in the left-right direction so as to protrude from the side wall12 of the housing 10. However, the present disclosure is not limited thereto. For example, one or three or more connectors 20 may protrude from the housing 10. Alternatively, the housing 10 may have a plurality of the connectors 20 protruding in different directions, such as one connector 20 protruding from the rear side of the housing 10 and another connector 20 protruding from the right side of the housing 10.

(B4) In the present embodiment, the connector 20 has a partially rounded shape so that the area of the upper part 21 partially overlaps with the area of the side part 22. However, the present disclosure is not limited thereto. The connector 20 may be formed in various shapes, such as a square column shape and a cylindrical shape. For example, in the case of the connector 20 formed in a cylindrical shape, the left half area of the upper part 21 overlaps with the upper half area of the side part 22 facing leftward. Similarly, the right half area of the upper part 21 overlaps with the upper half area of the side part 22 facing rightward. In the connector 20 formed in a cylindrical shape, the upper part 21 and the side part 22 may be defined so that their areas do not overlap with each other. For example, the connector 20 formed in a cylindrical shape may be equally divided into four parts so that the central angle of each of the four parts is 90 degrees, and one of the divided parts may be defined as the upper part 21 or the side part 22.

(B5) In the present embodiment, in the event of a collision involving the moving vehicle VC with an obstacle in front, the connector 20 is expected to be subjected to a force from the dash panel DP arranged at a position rearward and upward of the connector 20. However, the present disclosure is not limited thereto. For example, in the event of a collision involving the vehicle VC from the side, the connector 20 is expected to be subjected to a force from a component arranged on the side of the connector 20. The second protective part 32 suppresses an external force acting on the connector 20 from the side of the connector 20, thereby appropriately protecting the connector 20. The present disclosure is applicable to various situations where the junction box 100 may be subjected to an impact.

(B6) In the present embodiment, the first protective part 31, the second protective part 32, and the third protective part 33 together form a smooth shape which is continuous with each other. However, the present disclosure is not limited thereto. The first protective part 31, the second protective part 32, and the third protective part 33 may be provided separately. In this case, for example, the first protective part 31, the second protective part 32, and the third protective part 33 may be fastened to a region of the housing 10 respectively.

(B7) In the present embodiment, the second protective part 32 covers the first connector 20a from the left direction, and covers the second connector 20b from the right direction. That is, the second protective part 32 covers the connector 20 from either the left direction or the right direction. However, the present disclosure is not limited thereto. The second protective part 32 may cover the connector 20 from both the left direction and the right direction.

(B8) In the present embodiment, the protective part 30 has the third protective part 33. However, the present disclosure may omit the third protective part 33. For example, in the case where the connector 20 is expected to be subjected to an external force mainly from the upper direction, the third protective part 33 for covering the connector 20 from the rear can be omitted.

(B9) In the present embodiment, a region of the electrical wiring EW including the connection portion to the connector 20 is exposed as the bare wiring BW which is not covered with the covering material CM. However, the present disclosure is not limited thereto. The electrical wiring EW may be completely covered with the covering material CM up to the region including the connection portion to the connector 20 so that the bare wiring BW is not exposed.

(B10) In the present embodiment, the first protective part 31, the second protective part 32, and the third protective part 33 cover the bare wiring BW which is not covered with the covering material CM. However, the present disclosure is not limited thereto. For example, in the case where the covering material CM is configured to completely cover the connector 20 up to a region including the connection portion to the connector 20 so that the bare wiring BW is not exposed, the first protective part 31, the second protective part 32, and the third protective part 33 may not cover the region of the electrical wiring EW.

(B11) In the present embodiment, the housing 10 has the protruding part 14 which protrudes rearward from the rear side wall 12 of the housing 10, and the protective part 30 has the fastening part 35 which is fastened to the protruding part 14. However, the present disclosure is not limited thereto. The protective part 30 may be fixed to the housing 10 by arbitrary fixing means without using the protruding part 14. Alternatively, the protective part 30 may be fixed to a component, other than the housing 10, arranged in the vicinity of the housing 10.

(B12) In the present embodiment, the protective part 30 and the housing 10 are electrically connected via the fastening part 35. However, the present disclosure is not limited thereto. For example, in the case where the periphery of the protective part 30 is covered with an insulating material, the protective part 30 and the housing 10 may not be electrically connected.

(B13) In the present embodiment, the protruding part 14 protrudes rearward at a position on the side wall 12, above the connector 20. However, the present disclosure is not limited thereto. The protruding part 14 only needs to protrude at a position on the side wall 12, different from the protruding position of the connector 20, for example, rearward at a position on the side wall 12, to the right of, to the left of, or below the connector 20. Even in this case, the protective part 30 flexibly deforms with the protruding part 14 as a starting point, thereby effectively absorbing a subjected external force. Accordingly, the protective part 30 is capable of appropriately protecting the connector 20.

The present disclosure is not limited to the embodiments described above, and may be embodied in various configurations without departing from the spirit of the present disclosure. For example, the technical features in the embodiments corresponding to the technical features in the respective aspects disclosed in the summary of the invention may be appropriately replaced or combined in order to solve some or all of the problems described above, or in order to achieve some or all of the effects described above. Furthermore, any of the technical features not described as being essential in the present specification may be omitted appropriately. For example, the present disclosure may be embodied in the following aspects.
(1) In one aspect of the present disclosure, a junction box used in a state of being connected to a fuel cell is provided. The junction box includes a housing, a connector protruding from a side wall of the housing, and a protective part configured to cover at least a region of the connector to protect the connector. The protective part has a first protective part facing at least a region of an upper part of the connector, and a second protective part facing at least a region of a side part of the connector. In the present aspect, the first protective part faces at least a region of the upper part of the connector, thereby suppressing an external force acting on the connector from the side facing to the upper part of the connector. Furthermore, the second protective part faces at least a region of the side part of the connector, thereby suppressing an external force acting on the connector from the side facing to the side part of the connector. This suppresses the occurrence of damage to the connector due to an external force.
(2) In the aspect described above, the protective part may have a third protective part facing at least a region of a connector end in a protruding direction of the connector. In the present aspect, the third protective part faces at least a region of the connector end protruding in the protruding direction of the connector, thereby suppressing an external force acting on the connector from the side facing to the connector end.
(3) In the aspect described above, the first protective part, the second protective part, and the third protective part may be configured to cover a region of electrical wiring connected to the connector and the region of electrical wiring includes a connection portion to the connector. In the present aspect, the first protective part, the second protective part, and the third protective part are configured to cover the region of the electrical wiring connected to the connector including the connection portion to the connector, and thereby the region of the electrical wiring including the connection portion to the connector is protected by the first protective part, the second protective part, and the third protective part. This suppresses the occurrence of damage to the region of the electrical wiring connected to the connector due to an external force. Furthermore, in the configuration where the region of the electrical wiring including the connection portion to the connector is not covered with a covering material made of an insulating material, while exposed as bare wiring, the contact of another component with the exposed bare wiring is suppressed as well.
(4) In the aspect described above, the housing may have a protruding part protruding from the side wall at a position different from a protruding position of the connector, and the protective part may have a fastening part fastened to the protruding part. In the present aspect, since the protective part has the fastening part fastened to the protruding part, when the protective part is subjected to an external force, the protective part flexibly deforms with the protruding part as a starting point, thereby effectively absorbing the external force. Accordingly, the protective part is capable of appropriately protecting the connector.
(5) In the aspect described above, the protective part and the housing may be electrically connected via the fastening part. In the present aspect, since the protective part and the housing are electrically connected via the fastening part, when the connector is damaged, and the damaged connector comes into contact with the protective part, the current flowing from the connector to the protective part is conducted to the housing via the fastening part.

## Claims

1. A junction box (100) used in connection with a fuel cell comprising:
a housing (10);
a connector (20) protruding from a side wall (12) of the housing (10); and
a protective part (30) covering at least a region of the connector (20) to protect the connector (20),
the protective part (30) having:
a first protective part (31) facing at least a region of an upper part (21) of the connector (20); and
a second protective part (32) facing at least a region of a side part (22) of the connector (20).

2. The junction box (100) according to claim 1, wherein
the protective part (30) has a third protective part (33) facing at least a region of a connector end (23) in a protruding direction of the connector (20).

3. The junction box (100) according to claim 2, wherein
the first protective part (31), the second protective part (32), and the third protective part (33) are configured to cover a region of electrical wiring (EW) connected to the connector (20), and the region of the electrical writing (EW) includes a connection portion to the connector (20).

4. The junction box (100) according to claim 1, wherein
the housing (10) has a protruding part (14) protruding from the side wall (12) at a position different from a protruding position of the connector (20), and
the protective part (30) has a fastening part (35) fastened to the protruding part (14).

5. The junction box (100) according to claim 4, wherein
the protective part (30) and the housing (10) are electrically connected via the fastening part (35).
